# EUROPÄISCHE PATENTSCHRIFT

(11) **EP 2 372 333 B1**
(45) Veröffentlichungstag und Bekanntmachung des Hinweises auf die Patenterteilung: **26.10.2016**
(21) Anmeldenummer: 11160713.1
(22) Anmeldetag: 31.03.2011
(51) Int. Cl.: G01M 17/007

(54) **Prüfstand und Verfahren zum Überprüfen von Fahrdynamiksystemen und/oder deren Komponenten**
Test facility and method for testing driving dynamics systems and/or their components
Niveau de contrôle et procédé de contrôle de systèmes dynamiques de conduite et/ou de leurs composants

(30) Priorität: 01.04.2010 DE 102010013866
(43) Veröffentlichungstag der Anmeldung: 05.10.2011
(73) Patentinhaber: FSD Fahrzeugsystemdaten GmbH, 01307 Dresden (DE)
(72) Erfinder: Bönninger, Jürgen, 01326, Dresden (DE); Lüttich, Hans-Robert, 01809, Dohna, OT Burgstädtel (DE); Blumenschein, Dieter, 01326, Dresden (DE)
(74) Vertreter: Michalski Hüttermann & Partner Patentanwälte mbB

(56) Entgegenhaltungen:
- EP-A1- 1 394 527
- US-A- 5 111 685

## Beschreibung

Die Erfindung betrifft einen Prüfstand für ein Kraftfahrzeug, welcher einen ersten Vorderachsendoppelrollensatz und einen zweiten Vorderachsendoppelrollensatz sowie einen ersten Hinterachsendoppelrollensatz und einen zweiten Hinterachsendoppelrollensatz aufweist, sowie ein Verfahren zum Überprüfen von Fahrdynamiksystemen und/oder deren Komponenten.

Derartige Prüfstände zur Durchführung eines derartigen Verfahrens werden hauptsächlich für Fahrdynamikprüfungen eines Kraftfahrzeuges benutzt, wobei die Prüfstände meist einen sehr komplizierten Aufbau aufweisen, um Fahrdynamikregelungen eines Kraftfahrzeuges testen zu können. Die Vorderachsendoppelrollensätze, auf welchen die Vorderräder des zu prüfenden Kraftfahrzeuges positionierbar sind, und die Hinterachsendoppelrollensätze, auf welchen die Hinterräder des zu prüfenden Kraftfahrzeuges positionierbar sind, sind hierbei üblicherweise ortsfest an einer Plattform angeordnet, wobei die Plattform selber bewegbar ist. Um den gesamten Regelbereich abdecken und simulieren zu können, sind hierfür meist sehr viele Freiheitsgrade und Variablen notwendig, so dass meist die gesamte Plattform, auf welcher die Vorderachsendoppelrollensätze und die Hinterachsendoppelrollensätze angeordnet sind, schwingen, kippen und sich verdrehen kann. Dadurch werden dabei sowohl die Hinterachsendoppelrollensätze als auch die Vorderachsendoppelrollensätze gleichzeitig zueinander verschwenkt, so dass ein auf dem Prüfstand angeordnetes Kraftfahrzeug sowohl um seinen Heckbereich als auch seinen Frontbereich verkippt bzw. verschwenkt wird. Um dies realisieren zu können, weist der gesamte Prüfstand einen sehr aufwendigen Aufbau und eine sehr aufwendige Regelung auf.

Aus EP 1 394 527 A1 ist ein Rollenprüfstand bekannt, bei dem zur Messung von Querkräften an drehenden Hinterrädern die Hinterräder quer zur Längsrichtung des zu prüfenden Kraftfahrzeugs entlang gerader Schienen verschoben werden können.

Aus US 5 111 685 A ist ein Rollenprüfstand bekannt, bei dem zur Simulation einer Kurvenfahrt ein zu prüfendes Kraftfahrzeug, das mit jeweils einem Hinterrad auf einem um eine feststehende Achse drehbaren Hinterradlaufband positioniert ist, gedreht werden kann.

Aufgabe der Erfindung ist es daher, einen Prüfstand und ein Verfahren zum Überprüfen von Fahrdynamiksystemen und/oder deren Komponenten zur Verfügung zu stellen, welche sich durch einen vereinfachteren Aufbau für eine Fahrdynamikprüfung auszeichnen.

Die Lösung der Aufgabe erfolgt erfindungsgemäß durch die Merkmale des Anspruchs 1. Vorteilhafte Ausgestaltungen sind in den Unteransprüchen angegeben.

Der erfindungsgemäße Prüfstand für ein Kraftfahrzeug weist einen ersten zwei Rollen aufweisenden Vorderachsendoppelrollensatz und einen zweiten zwei Rollen aufweisenden Vorderachsendoppelrollensatz und einen ersten zwei Rollen aufweisenden Hinterachsendoppelrollensatz und einen zweiten zwei Rollen aufweisenden Hinterachsendoppelrollensatz auf, wobei der erste Hinterachsendoppelrollensatz und der zweite Hinterachsendoppelrollensatz relativ zu dem ersten Vorderachsendoppelrollensatz und/oder dem zweiten Vorderachsendoppelrollensatz in einer Ebene schwenkbar und/ oder sowohl schwenkbar als auch verschiebbar gelagert ist, wobei der erste Hinterachsendoppelrollensatz und der zweite Hinterachsendoppelrollensatz zur Ausführung von bogenförmigen Bahnen verschwenkbar ausgebildet sind.

Dieser erfindungsgemäße Prüfstand zur Prüfung der Wirksamkeit der Fahrdynamikregelung eines Kraftfahrzeuges zeichnet sich dadurch aus, dass hierbei nicht mehr eine gesamte Plattform, auf welcher sowohl die Vorderachsendoppelrollensätze als auch die Hinterachsendoppelrollensätze angeordnet sind, verschwenkt werden muss, sondern lediglich eine seitlich gerichtete Verschwenkbewegung der Hinterachsendoppelrollensätze erfolgt, wobei die Verschwenkbewegung der Hinterachsendoppelrollensätze in einer Ebene zueinander erfolgt, was bedeutet, dass sich die Hinterachsendoppelrollensätze nur innerhalb einer Ebene zueinander verschieben. Der erste und zweite Hinterachsendoppelrollensatz ist relativ zu dem ersten Vorderachsendappelrollensatz und/oder dem zweiten Vorderachsendoppelrollensatz in einer Ebene schwenkbar und/ oder sowohl schwenkbar als auch verschiebbar, insbesondere seitlich verschiebbar, gelagert. Der erste und zweite Hinterachsendoppelrollensatz kann zur Ausführung von bogenförmigen Bahnen verschwenkbar ausgebildet sein, wobei der erste und zweite Hinterachsendoppelrollensatz beispielsweise in oder auf bogenförmigen Bahnen verschiebbar oder verschwenkbar ist. Die Verschwenkbewegung selber erfolgt dabei vorzugsweise mit einer hohen Geschwindigkeit. Die Verschwenkbewegung kann sich zusammensetzen aus einer ersten Phase, der Beschleunigungsphase, mit einer frei einstellbaren Beschleunigung, einer zweiten Phase mit einer frei einstellbaren, gleichförmigen Geschwindigkeit und einer dritten Phase, der Verzögerungsphase, mit einer frei einstellbaren Verzögerung, wobei die Verschwenkbewegung beispielsweise sehr schnell oder beliebig langsam erfolgen kann. Ferner kann die Verschwenkbewegung in einer beliebigen Stellung, insbesondere vor Erreichen einer Endlage, gestoppt werden. Die Hinterachsendoppelrollensätze können dabei relativ zu dem ersten Vorderachsendoppelrollensatz und/oder den zweiten Vorderachsendoppelrollensatz verschwenkt und/ oder sowohl verschwenkt als auch verschoben werden, so dass die Hinterräder des Kraftfahrzeuges, welche auf den Hinterachsendoppelrollensätzen angeordnet sind, relativ zu den auf den Vorderachsendoppelrollensätzen angeordneten Vorderrädern verschwenkt und/oder sowohl verschwenkt als auch verschoben werden können, wobei es dadurch möglich ist, ein seitliches Ausbrechen des Heckbereiches des Kraftfahrzeuges zu simulieren. Vorzugsweise werden während des Verschwenkens der Hinterachsendoppelrollensätze alle Räder des Kraftfahrzeuges über die Vorderachsendoppelrollensätze und die Hinterachsendoppelrollensätze angetrieben, so dass sich die Räder drehen, was einem Fahrzustand eines sogenannten "Ausrollens" entspricht. Bricht unter diesen Bedingungen der Heckbereich des Kraftfahrzeuges durch ein Verschwenken bzw. Auslenken der Hinterachsendoppelrollensätze relativ zu den Vorderachsendoppelrollensätze aus, so ist es möglich zu bewirken, dem KraftFahrzeug bei eingelenkten Vorderrädern eine Querbeschleunigung und/oder eine Gierrate aufzuprägen. Die Kraftfahrzeugsensorik diagnostiziert kritische Fahrdynamik-Werte und ein elektronisches Stabilitätsprogramm (ESP) -Regelsystem kann eingreifen. Dadurch ist die Simulation eines übersteuernden Schleudervorganges möglich, um insbesondere die Funktionsfähigkeit des ESP-Regelsystems des zu prüfenden Kraftfahrzeuges bestimmen zu können.

Nach einer vorteilhaften Ausgestaltung der Erfindung sind der erste Hinterachsendoppelrollensatz an einer ersten Schleudervorrichtung und der zweite Hinterachsendoppelrollensatz an einer zweiten Schleudervorrichtung angeordnet, wobei die erste Schleudervorrichtung und die zweite Schleudervorrichtung über ein Koppelelement miteinander verbunden sind. Über die Schleudervorrichtungen wird eine Schwenkbewegung der Hinterachsendoppelrollensätze erreicht. Beide Hinterachsendoppelrollensätze weisen dabei separate Schleudervorrichtungen auf. Jeder der beiden Schleudervorrichtungen rollt vorzugsweise über eine unterhalb der Schleudervorrichtung angeordnete Stahlplatte, wobei die Schleudervorrichtung bevorzugt über Stahlkugeln auf der Stahlplatte beweglich gelagert ist. Das Koppelelement ist zwischen den beiden Hinterachsendoppelrollensätzen angeordnet, wobei das Koppelelement mit seinem ersten Ende an dem ersten Hinterachsendoppelrollensatz befestigt ist und mit seinem dem ersten Ende gegenüber liegenden zweiten Ende an dem zweiten Hinterachsendoppelrollensatz befestigt ist. Dadurch, dass das Koppelelement an den beiden Hinterachsendoppelrollensätzen äquidistant befestigt ist, wird bei einem Verschwenken der Hinterachsendoppelrollensätzen der Abstand zwischen den beiden Hinterachsendoppelrollensätzen und die Ausrichtung der beiden Hinterachsendoppelrollensätzen zueinander nicht verändert. Somit findet bei dem Verschwenken der Hinterachsendoppelrollensätze relativ zu den Vorderachsendoppelrollensätzen vorzugsweise keine Schwenkbewegung der Hinterachsendoppelrollensätzen zueinander statt.

Weiter ist bevorzugt zur Ausführung einer Verschwenkbewegung des ersten Hinterachsendoppelrollensatzes und des zweiten Hinterachsendoppelrollensatzes ein Schwenkarm vorgesehen, wobei der Schwenkarm mit einem ersten Ende gelenkig an dem Koppelelement angeordnet ist und mit einem dem ersten Ende gegenüberliegenden zweiten Ende ortsfest an dem Prüfstand befestigt ist, wobei insbesondere der Schwenkarm entlang seiner Längsachse in seiner Länge veränderbar ist und der Schwenkarm um sein zweites Ende drehbar angeordnet ist. Der Schwenkarm ist vorzugsweise mit seinem ersten Ende entlang der Längsachse des Koppelelements mittig an dem Koppelelement angeordnet, wobei der Schwenkarm mit seiner Längsachse vorzugsweise vertikal zur Längsachse des Koppelelements ausgerichtet ist. Mittels des Schwenkarms kann eine Kraft auf das Koppelelement übertragen werden, durch welche das Koppelelement eine Verschwenkbewegung auf die Schleudervorrichtungen übertragen kann, wobei die Verschwenkbewegung der Schleudervorrichtungen bzw. des Koppelelements vorzugsweise um die gelenkige Anlagerung des Schwenkarmes an dem Koppelelement erfolgt. Es erfolgt vorzugsweise eine Längenänderung des Schwenkarmes während der Verschwenkbewegung der Hinterachsendoppelrollensätze, um sicherzustellen, dass die Hinterräder des zu prüfenden Fahrzeuges bei der Verschwenkbewegung exakt jeweils die Kreisbahn insbesondere um einen virtuellen Drehpunkt der Lenkgeometrie am rechten gefesselten Vorderrad des Kraftfahrzeugs beschreiben können, die sich aus der konkreten Fahrzeuggeometrie notwendig macht. Demnach erfolgt auch während der Verschwenkbewegung eine Abstandsanpassung der Hinterachsendoppelrollensätze zu den Vorderachsendoppelrollensätzen. Zudem ist während der Verschwenkbewegung des Schwenkarmes um sein zweites, fest gelagertes Ende dieser schwenkbar bewegbar, wobei die Verschwenkbewegung des Schwenkarmes über die gelenkige Verbindung mit dem Koppelelement an das Koppelelement und damit an die beiden Schleudervorrichtungen übertragen werden kann.

Weiter ist es bevorzugt vorgesehen, dass die erste Schleudervorrichtung und/oder die zweite Schleudervorrichtung Arretierungsmittel aufweist. Dabei ist vorzugsweise eine Rückholeinrichtung zum Zusammenfahren der verstellbaren Länge des Schwenkarmes und ein Arretierungsmittel zum Feststellen der gelenkigen Lagerung des Schwenkarmes an dem Koppelelement vorgesehen, wobei eine vorzugsweise rechtwinklige Arretierung des Schwenkarmes am Koppelelement mittels Arretierung, beispielsweise mit Hilfe eines Zentrierhakens, stets außerhalb des Prüfzustandes "Schwenken" erfolgt. Während der Verschwenkung der Hinterachsendoppelrollensätze sind die Arretierungsmittel gelöst, so dass keine Arretierung des Schwenkarmes am Koppelelement vorgesehen ist. Mittels dieser Arretierungsmittel kann die Verschwenkbewegung und damit die Simulierung eines Fahrzeugschleuderns unterbunden werden. Sind die Arretierungsmittel nicht in der gelösten Position sondern in einer Funktionsposition, d. h., dass eine Arretierung des Schwenkarmes relativ zu dem Koppelelement erfolgt, so sind die Längenänderung und/oder das Verschwenken des Koppelelements um den Schwenkarm gestoppt. Der Schwenkarm ist in dieser Funktionsposition starr mit dem Koppelelement verbunden. In dieser Funktionsposition der Arretierungsmittel können beispielsweise normale Ablaufprüfungen in einem motorischen oder generatorischen Betrieb durchgeführt werden.

Zur Realisierung einer Verschwenkbewegung des ersten Hinterachsendoppelrollensatzes und des zweiten Hinterachsendoppelrollensatzes ist der Schwenkarm mittels eines Antriebes, vorzugsweise mittels eines Kolbens eines Hydraulikzylinders antreibbar, wobei insbesondere eine Antriebsbewegung des Antriebs, insbesondere des Kolbens des Hydraulikzylinders über ein SPS-gesteuertes hydraulisches Proportionalventil auslösbar ist und mittels eines SPS-Programms in seiner Bewegung und dem Grad der Beschleunigung steuerbar ist.
Der Hydraulikzylinder mit dem darin befindlichen Kolben ist vorzugsweise entlang der Längsseite des Schwenkarmes an dem Schwenkarm vorzugsweise starr befestigt. Wird der Kolben des Hydraulikzylinders angetrieben, so wird über den Hydraulikzylinder auf den Schwenkarm eine Kraft aufgebracht, mittels welcher eine Drehbewegung des Schwenkarmes und damit des an dem Schwenkarm angelagerten Koppelelements bewirkt wird. Der Hydraulikzylinder mit dem Kolben kann über ein Leitungssystem und einem Proportionalventil vorzugsweise mit einem großen Blasenspeicher verbunden sein. Der Blasenspeicher wird ununterbrochen auf einem bestimmten Druckniveau gehalten. Nach Auslösen des Proportionalventils kann die benötigte hydraulische Energie für eine vorzugsweise explosionsartige Antriebsbewegung des Schwenkarmes zur Verfügung gestellt werden oder für das Verschwenken mit geringer Geschwindigkeit gedrosselt abgegeben werden. Die Verschwenkbewegung des Prüfstands kann in seiner Bewegung, Bewegungsrichtung und/oder Beschleunigung mittels des über das SPS-Programm gesteuerten Antriebs bewirkt werden, wobei dieser Antrieb vorzugsweise durch Druck-Beaufschlagung des Kolbens des Hydraulikzylinders realisiert wird, welcher mittels eines SPS-gesteuerten hydraulischen Proportionalventils auslösbar ist. Mit Hilfe der SPS (speicherprogrammierbare Steuerung) kann der Ablauf der Verschwenkbewegung und damit des Schleudervorganges frei programmiert werden. Zeitliche Abläufe, die Größe der Beschleunigung, die Schleudergeschwindigkeit und der Abbremsprozess der Schleuderbewegung können dabei variiert werden. Dadurch ist eine Anpassung an die Regelcharakteristiken unterschiedlicher Fahrzeugtypen oder an die Untersuchung weiterer Fahrzeugsysteme möglich.

Gemäß einer weiter bevorzugten Ausgestaltung der Erfindung ist der erste Vorderachsendoppelrollensatz während einer Verschwenkbewegung des ersten Hinterachsendoppelrollensatzes und des zweiten Hinterachsendoppelrollensatzes in einer festen Position an dem Prüfstand angeordnet, wobei insbesondere der zweite Vorderachsendoppelrollensatz während einer Verschwenkbewegung des ersten Hinterachsendoppelrollensatzes und des zweiten Hinterachsendoppelrollensatzes in Längsrichtung des Prüfstandes beweglich an dem Prüfstand angeordnet ist. Dies bedeutet, dass der erste Vorderachsendoppelrollensatz vorzugsweise bei einer Verschwenkbewegung der Hinterachsendoppelrollensätze nicht verschoben wird, sondern an der Position verbleibt, welche beim Einstellen des Prüfstandes an den Radstand des zu prüfenden Kraftfahrzeuges gewählt wurde. Während der Verschwenkbewegung, bei welcher der Heckbereich des Kraftfahrzeuges ausbricht, kann damit das gesamte Kraftfahrzeug um den Achsschenkelbolzen bzw. virtuellen Drehpunkt gemäß Lenkgeometrie des an dem ersten Vorderachsendoppelrollensatz angeordneten Vorderrades verschwenkt werden. Dadurch, dass der zweite Vorderachsendoppelrollensatz während einer Verschwenkbewegung des ersten Hinterachsendoppelrollensatzes und des zweiten Hinterachsendoppelrollensatzes in Längsrichtung des Prüfstandes beweglich an dem Prüfstand angeordnet ist, kann der zweite Vorderachsendoppelrollensatz bei der Verschwenkbewegung der Hinterachsendoppelrollensätze eine Ausgleichsbewegung vornehmen, um zu verhindern, dass das Kraftfahrzeug bei der Verschwenkbewegung die Doppelrollensätze verlässt. Der zweite Vorderachsendoppelrollensatz ist dabei vorzugsweise in Längsrichtung des Prüfstandes in Richtung des hinter ihm angeordneten Hinterachsendoppelrollensatzes bewegbar. Die während der Längsbewegung des zweiten Vorderachsendoppelrollensatzes verrichtete Reibungsarbeit wird durch einen Verschiebemechanismus, vorzugsweise mit hydraulischer Hilfsenergie, aufgebracht. Der Bewegungsablauf selbst wird dabei nicht aktiv vom Verschiebemechanismus geregelt, sondern ergibt sich zwangsläufig aus der konkreten Fahrzeuggeometrie. Jedes Fahrzeug determiniert damit selbst, wie der Bewegungsablauf für den zweiten Vorderachsendoppelrollensatz in Abhängigkeit vom Bewegungsablauf der Schleudervorrichtungen der Hinterachsendoppelrollensätze erfolgen muss.

Ferner ist es vorteilhafterweise vorgesehen, dass die Rollen des ersten Hinterachsendoppelrollensatzes und/oder des zweiten Hinterachsendoppelrollensatzes sowie die Rollen des ersten Vorderachsendoppelrollensatzes und/oder des zweiten Vorderachsendoppelrollensatzes in ihrer Drehrichtung und/oder in ihrer Drehzahl variabel einstellbar sind, wobei insbesondere alle Rollen stets gleichsinnig drehen, wobei insbesondere die Drehzahl der Rollen des ersten und des zweiten Hinterachsendoppelrollensatzes zu der Drehzahl der Rollen des ersten und des zweiten Vorderachsendoppelrollensatzes entkoppelt ist. Die Drehrichtung und die Drehzahl der Rollen der Doppelrollensätze sind dadurch achsweise frei wählbar und an die entsprechend an dem Fahrzeug vorzunehmende Prüfung anpassbar. Dabei können die Drehzahl der Rollen der Vorderachsendoppelrollensätze vorzugsweise unabhängig von der Drehrichtung und der Drehzahl der Rollen der Hinterachsendoppelrollensätze eingestellt und angesteuert werden. Entkoppelt bedeutet hierbei, dass die Drehzahl der Rollen der Hinterachsendoppelrollensätze unabhängig von der Drehzahl der Rollen der Vorderachsendoppelrollensätze einstellbar ist. Bei dieser Einstellung ist es möglich Fehlerreaktionen der Sensoren zu erkennen. Es ist aber auch möglich, dass die Drehzahl der Rollen der Hinterachsendoppelrollensätze zu der Drehzahl der Rollen der Vorderachsendoppelrollensätze synchron gekoppelt ist oder in einem Maser-Slave-Modus einander nachgeführt werden.

Weiter ist es vorteilhafterweise vorgesehen, dass die Rollen des ersten und des zweiten Hinterachsendoppelrollensatzes und die Rollen des ersten und des zweiten Vorderachsendoppelrollensatzes jeweils achsweise über mindestens einen Motor des Prüfstandes antreibbar sind ("motorischer Antrieb") oder diese Rollen nur durch die Räder des zu prüfenden Fahrzeuges antreibbar sind ("generatorischer Antrieb"), wobei insbesondere für den Antrieb der Rollen des ersten und des zweiten Vorderachsendoppelrollensatzes ein gemeinsamer Zentralantrieb vorgesehen ist, wobei insbesondere eine erste schaltbare Kupplung zum Trennen des ersten und des zweiten Vorderachsendoppelrollensatzes und/oder eine zweite schaltbare Kupplung zum Trennen des ersten und des zweiten Hinterachsendoppelrollensatzes vorgesehen ist. Für den Antrieb der Rollen der Doppelrollensätze kann dabei bevorzugt achsweise jeweils ein gemeinsamer Zentralantrieb vorgesehen sein. Der gemeinsame Zentralantrieb ermöglicht es die benötigte Antriebsenergie beim motorischen Antrieb über genau einen Antrieb bereitzustellen ohne dass mehrere Antriebe benötigt werden, so dass der apparative Aufwand für den Prüfstand reduziert ist und die Herstellungskosten sowie Wartungskosten reduziert sind. Beim generatorischen Antrieb ermöglicht der gemeinsame Zentralantrieb das Simulieren von Fahrwiderständen, in dem eine elektrische Leistungsabgabe auf einem Energieniveau erfolgt, das ohne größeren Transformationsaufwand genutzt und/oder in ein bestehendes Stromnetz eingespeist werden kann. Durch die erste schaltbare Kupplung und/oder zweite schaltbare Kupplung können die Rollensätze von dem Zentralantrieb getrennt werden, wobei die erste schaltbare Kupplung und/oder die zweite schaltbare Kupplung im laufenden Betrieb, beispielsweise getrennt oder gemeinsam, schaltbar sind. Durch das Trennen der Rollensätze voneinander und von dem Zentralantrieb wird eine gegenseitige Beeinflussung der Drehzahlverläufe der Doppelrollensätze, und damit der Räder, vermieden.

Ferner ist vorteilhaft vorgesehen, dass der erste und der zweite Vorderachsendoppelrollensatz und/oder der erste und der zweite Hinterachsendoppelrollensatz jeweils mindestens eine freilaufende Rolle aufweist, wobei insbesondere jeweils mindestens eine freilaufende Rolle einen Impulsgeber zur Drehzahlmessung aufweist. Jeder Doppelrollensatz kann dabei eine angetriebene Rolle und eine freilaufende Rolle aufweisen. Die angetriebene Rolle, oder Treibrolle, kann beispielsweise direkt oder über eine Gelenkwelle angetriebenen sein. Die freilaufende Rolle, oder Freilaufrolle, wird über das Rad des Kraftfahrzeuges angetrieben oder mitgenommen, welches die freilaufende Rolle kontaktiert. Dabei können alle freilaufenden Rollen einen Impulsgeber, beispielsweise in Form eines Zahnrades, aufweisen, welcher die Erfassung der Drehzahl der jeweiligen freilaufenden Rolle und damit des zugeordneten Rades des Kraftfahrzeuges ermöglicht. Dadurch kann durch einen jeweils zugeordneten Drehzahlsensor der Verlauf der jeweiligen Raddrehzahl, der Drehzahlverlauf, erfasst werden.

Weiterhin ist vorteilhafterweise vorgesehen, dass ein Datenadapter zur Aufnahme und/oder Speicherung von Signalen von Fahrdynamiksystemen und/oder Fahrzeugsteuergeräten vorgesehen ist. Der Datenadapter kann eine Speichereinheit zum Speichern erfasster Daten/ Steuersignale aufweisen. Der Datenadapter ist zur Aufzeichnung von Steuersignalen des Fahrdynamiksystems und/ oder weitere Steuergeräte des Kraftfahrzeuges, unmittelbar mit dem Fahrdynamiksystem oder mit einem Datenbussystem des Kraftfahrzeuges verbindbar ausgebildet. Der Datenadapter kann Signale zwischen den Steuergeräten erfassen, beispielsweise mittels einer speziellen Software, und speichern. Zur Auswertung der erfassten Daten/ Steuersignale ist der Datenadapter mit einem Auswertesystem und/oder einem Regelsystem beispielsweise des Prüfstandes verbindbar. Durch das Erfassen der Sensorwerte und/oder der Steuersignale nicht nur des Fahrdynamiksystems sondern auch weiterer Steuergeräte können mögliche Störungen der Steuersignale des Fahrdynamiksystems erkannt werden. Darüber hinaus ermöglichen die erfassten Steuersignale der Steuergeräte des Kraftfahrzeuges die präzise Einstellung eines bestimmten, bereits erfassten, Fahrzustandes oder Fahrmanöver des Kraftfahrzeuges, der mittels des erfindungsgemäßen Prüfstandes wiederholbar einstellbar ist.

Die Erfindung betrifft ferner ein Verfahren zum Überprüfen von Fahrdynamiksystemen und/oder deren Komponenten mit Hilfe eines Prüfstands mit einem ersten Hinterachsendoppelrollensatzes und einem zweiten Hinterachsendoppelrollensatzes zur Aufnahme der Hinterräder eines Kraftfahrzeugs. Der Prüfstand kann wie vorstehend beschrieben aus- und weitergebildet sein. Ein Kraftfahrzeug wird auf dem Prüfstand befestigt, wobei die Hinterräder des Kraftfahrzeugs jeweils mit dem ersten Hinterachsendoppelrollensatz und dem zweiten Hinterachsendoppelrollensatz verbunden werden. Erfindungsgemäß werden der erste Hinterachsendoppelrollensatzes und der zweiten Hinterachsendoppelrollensatzes plötzlich entlang bogenförmiger Bahnen verschwenkt, und Ausgangssignale von Fahrdynamiksystemen, wie beispielsweise eines ESP-Systems, und/oder Drehzahlverläufe der einzelnen Räder des Kraftfahrzeuges aufgenommen und zur Überprüfung der Funktionsweise des Fahrdynamiksystems ausgewertet. Das Erzeugen von Ausgangssignalen des Fahrdynamiksystems oder von Regeleingriffen des Fahrdynamiksystems, beispielsweise Veränderungen der Drehzahlverläufe der Räder, kann durch ein Einwirken des Prüfstandes auf das Kraftfahrzeug erfolgen. Durch den erfindungsgemäßen Prüfstand kann dem Kraftfahrzeug, vorzugsweise in dessen Schwerpunkt, beispielsweise eine Querbeschleunigung und/oder eine Gierrate aufgeprägt werden, wodurch das Kraftfahrzeug, insbesondere das Heck des Kraftfahrzeuges, eine Schleuderbewegung ausführt. Da im Wesentlichen nur die Hinterachsendoppelrollensätze verschwenkt werden brauchen, um beispielsweise ein Schleudern des Kraftfahrzeugs zu simulieren, können die übrigen Bauteile des Prüfstands im wesentlichen unbeweglich bleiben oder im Vergleich zu den Hinterachsendoppelrollensätzen nur geringfügig verschwenkt werden. Dadurch können Fahrdynamiksysteme mit Hilfe des erfindungsgemäßen Überprüfungsverfahrens mit einem vereinfachten Aufbau für eine Fahrdynamikprüfung durchgeführt werden. Ferner ist es möglich, die Verschwenkbewegung der Hinterachsendoppelrollensätze nicht nur mit einer hohen Geschwindigkeit, sondern auch nahezu beliebig langsam auszuführen. Zudem kann die Verschwenkbewegung in einer ausgelenkten Position angehalten werden, beispielsweise vor Erreichen einer Endlage, wobei die Räder des zu untersuchenden Kraftfahrzeuges weiterdrehen können. Dadurch kann die Simulation einer beispielsweise langsamen oder mäßig schnellen Kurvenfahrt bzw. einer Abbiege-Situation erfolgen, wodurch beispielsweise zusätzlich Komponenten eines sogenannten dynamischen Kurvenlichtes oder anderer Lichtfunktionen, beispielsweise eines statischen Kurvenlichtes oder Abbiegelichtes, untersucht werden können. Beim Simulieren eines übersteuernden Schleuderns durch das seitliche Verschwenken des Kraftfahrzeuges, insbesondere des Kraftfahrzeughecks, greift ein intaktes Fahrdynamiksystem an allen Rädern des Kraftfahrzeugs mit unterschiedlich stark dosierten Bremskräften ein, um das Kraftfahrzeug in der beabsichtigten Fahrspur zu halten. Durch die Erfassung der Drehzahlverläufe beispielsweise der freilaufenden Rollen, welche zum Beispiel an jedem Rollenpaar angeordnet sein kann, ist es möglich, den Drehzahlverlauf aller Räder des Kraftfahrzeuges ohne zusätzlichen Rüstauf wand zu erfassen. Dies ist über den Versuch zur Anregung des Fahrdynamiksystems hinaus auch in allen anderen Prüfmodi oder Verschwenkungszuständen oder Verschwenkpositionen möglich, was dadurch ermöglicht wird, dass der erfindungsgemäße Prüfstand in sehr vielen Freiheitsgraden programmierbar ist. Dabei wird bei der Simulation eines Fahrzustandes das eingestellte Programm durchgeführt, ohne dass Steuersignale des Fahrdynamiksystems oder die erfassten Messergebnisse oder extern gespeicherte Daten mit dem Prüfstand verknüpft werden, um den Verlauf des Versuches zu beeinflussen. Die Durchführung der Simulation und die Erfassung der Messdaten, beispielsweise der Drehzahlverläufe der Räder des Kraftfahrzeuges, erfolgt unabhängig von beispielsweise erfassten und aufgezeichneten Steuersignalen des Fahrdynamiksystems. Die Steuersignale des Fahrdynamiksystems können beispielsweise mit einem Datenadapter erfasst werden, welcher mit dem Fahrdynamiksystem direkt oder über ein Datenbussystem des Kraftfahrzeuges verbunden werden kann. Der Datenadapter kann zur Auswertung mit einem Auswertesystem oder Regelsystem verbunden werden. Die Drehzahlverläufe der Räder des Kraftfahrzeuges werden erfasst, der Ablauf der Simulation ist hiervon unbeeinflusst. Dadurch kann ohne einen Zugriff auf das kraftfahrzeugeigene Bussystem oder Fahrdynamiksystem, also Fahrdynamiksystem-unabhängig, ein Nachweis eines Eingreifens des Fahrdynamiksystems, beispielsweise vom elektronischen Stabilitätsprogramm ESP, durchgeführt werden. Dadurch kann, beispielsweise durch die Erfassung des Drehzahlverlaufes aller Räder, unmittelbar die Funktion des Fahrdynamiksystems des Kraftfahrzeuges erfasst werden.

Insbesondere wird eine seitliche Verschwenkbewegung des ersten und des zweiten Hinterachsendoppelrollensatzes, vorzugsweise nach rechts, mit Beginn des Überprüfungsverfahrens durch eine explosionsartige Freisetzung der Hauptenergie ausgeführt und dabei die Ausgangsignale der Fahrdynamiksysteme und/oder deren Komponenten zeitaufgelöst, vorzugweise über das fahrzeugeigene Bussystem, elektronisch erfasst und/oder die Bewegung der Fahrzeugräder, vorzugsweise des rechten Vorderrades, mit Videoaufnahmegeräten optisch erfasst, und/oder Drehzahlverläufe der einzelnen Räder des Kraftfahrzeuges über die freilaufende Rolle oder Doppelrolle erfasst und nachfolgend jeweils ausgewertet werden, wobei während des gesamten Überprüfungsverfahrens alle Doppelrollensätze sich in Drehbewegungen befinden und eine solche Mindestauslenkung des Lenkrades des Kraftfahrzeugs vorliegt, dass eine Aktivierung eines Lenkwinkelsensor des Kraftfahrzeugs vorhanden ist. Dies ermöglicht es auch besonders kritische Schleudersituationen des Kraftfahrzeugs zu simulieren und auch die Reaktion der Fahrdynamiksysteme in Extremsituationen zu überprüfen.

Vorzugsweise wird während der Verschwenkbewegung des ersten und des zweiten Hinterachsendoppelrollensatzes mittels eines ersten Hilfsantriebes, vorzugweise eines ersten Kolbens mit erstem Hilfszylinder, die Ausgleichbewegung des ersten und/oder zweiten Vorderachsendoppelrollensatze in Längsrichtung des Prüfstandes und gleichzeitig mittels eines zweiten Hilfsantriebes, vorzugweise eines zweiten Kolbens mit zweiten Hilfszylinder, die Ausgleichsbewegung des ersten und des zweiten Hinterachsendoppelrollensatzes in Längsrichtung des Schwenkarms bewirkt, wobei insbesondere im Moment des Beginns der Verschwenkbewegung die Rotation der Rollen des ersten und des zweiten Vorderachsendoppelrollensatzes (10, 12) und die Rotation der Rollen des ersten und des zweiten Hinterachsendoppelrollensatzes (14, 16) jeweils voneinander entkoppelt werden. Besonders bevorzugt erfolgt das Verschwenken des Kraftfahrzeugs um einen der Vorderachsendoppelrollensätze als Drehmittelpunkt, so dass nur für den jeweils anderen Vorderachsendoppelrollensatz der erste Hilfsantrieb erforderlich ist. Durch den jeweiligen Hilfsantrieb kann in direkter Nachbarschaft zu dem jeweiligen Fahrzeugrad die benötigte Energie für die während der Schwenkbewegung des Kraftfahrzeugs erforderlichen Ausgleichsbewegungen bereitgestellt werden, so dass durch eine einfache konstruktive Maßnahme die Fahrzeuggeometrie die erforderlichen Stellwege selbstständig bestimmt. Durch die Entkoppelung der Rotation der Rollen des ersten und des zweiten Vorderachsendoppelrollensatzes und der Rotation der Rollen des ersten und des zweiten Hinterachsendoppelrollensatzes, auch von einem Zentralantrieb, mittels einer schnell und sauber trennenden Kupplung, kann die Drehzahl des Rades und/oder der Rollen beispielsweise des ersten Vorderachsendoppelrollensatzes oder des ersten Hinterachsendoppelrollensatzes unabhängig von der Drehzahl des Rades und/oder der Rollen des zweiten Vorderachsendoppelrollensatzes oder des zweiten Hinterachsendoppelrollensatzes verlaufen. Zudem erfolgt der Drehzahlverlauf unabhängig vom Zentralantrieb, welcher die Rollen antreiben kann. Dadurch kann sichergestellt werden, dass der für jedes Rad erfasste Drehzahlverlauf der zugeordneten Rollen und/oder des zugeordneten Rollensatzes, beispielsweise jeweils über eine freilaufende Rolle, ausschließlich auf das Eingreifen des Fahrdynamiksystems zurückzuführen ist. Darüber hinaus kann sichergestellt werden, dass beispielsweise ein stärker abgebremstes Rad nicht wieder von einem schneller drehenden Rad derselben Doppelrollensatzachse (Vorderachse/ Hinterachse) über die achsweise Kopplung der Doppelrollensätze beschleunigt werden kann. Ebenso kann vermieden werden, einen sinkenden Drehzahlverlauf des schnelleren Rades als weiteren Bremseingriff zu interpretieren. Dadurch wird die Überprüfung der Reaktion der Fahrdynamiksysteme in Extremsituationen verbessert.

Besonders bevorzugt beginnt die Überprüfung von Fahrdynamiksystemen mit der Verschwenkbewegung des ersten und des zweiten Hinterachsendoppelrollensatzes aus der Ausgangslage des Schwenkarms und gleichzeitig wird eine Energiezufuhr des ersten Hilfsantriebs, vorzugweise des ersten Kolbens mit Hilfszylinder, und des zweiten Hilfsantriebs , vorzugweise des zweiten Kolbens mit Hilfszylinder, freigegeben und kann solange erfolgen bis der Schwenkarm seine Endlage erreicht, wobei damit die Überprüfung von Fahrdynamiksystemen beendet wird und auch die jeweilige Energiezufuhr für den ersten und den zweiten Hilfsantrieb beendet wird. Dadurch werden definierte Anfangsbedingungen und definierte Endbedingungen für die Durchführung des Überprüfungsverfahrens gegeben, die einen unnötigen Energiebedarf für die Hilfsantriebe vermeidet. Das Verschwenken des Schwenkarmes in seine Endlage kann dabei beispielsweise mit Pausen, einem zeitlich begrenzten Stoppen der Schwenkbewegung des Schwenkarmes, erfolgen.

Insbesondere wird während der Verschwenkbewegung des ersten und des zweiten Hinterachsendoppelrollensatzes eine formschlüssige Verbindung von Prüfstand und Fahrzeug über die Doppelrollensätze gehalten, indem eine fahrzeugangepasste Energiezufuhr für den ersten und zweiten Hilfsantrieb erfolgt und damit die Fahrzeuggeometrie des zu prüfenden Fahrzeugs den Verlauf dieser Verschwenkbewegung des ersten und des zweiten Hinterachsendoppelrollensatzes sowie die Ausgleichbewegung des ersten und/oder zweiten Vorderachsendoppelrollensatzes und die Ausgleichsbewegung des ersten und zweiten Hinterachsendoppelrollensatzes schablonenmäßig bestimmt. Die Ausgleichsbewegungen der einzelnen Doppelrollensätze können über das Kraftfahrzeug selbst gekoppelt werden, so dass der Regel- und Steuerauf wand gering gehalten werden kann.

Nachfolgend wird die Erfindung unter Bezugnahme auf die anliegenden Zeichnungen anhand eines bevorzugten Ausführungsbeispiels näher erläutert.

Es zeigen:
- Fig. 1: eine schematische Darstellung eines Prüfstandes gemäß der Erfindung in einer Ausgangsposition und
- Fig. 2: eine schematische Darstellung eines Ausschnittes des in Fig. 1 gezeigten Prüfstandes, wobei die Hinterachsendoppelrollensätze in einer Verschwenkposition gezeigt sind.

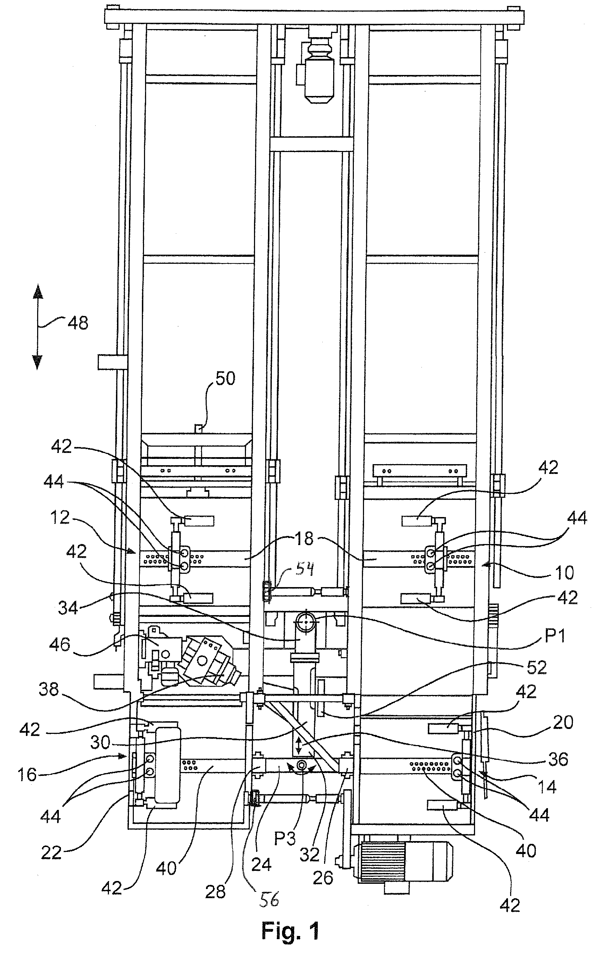

In Fig. 1 ist ein erfindungsgemäßer Prüfstand schematisch dargestellt. Der Prüfstand weist einen ersten zwei Rollen aufweisenden Vorderachsendoppelrollensatz 10 und einen zweiten zwei Rollen aufweisenden Vorderachsendoppelrollensatz 12 auf, auf welchen jeweils die Vorderräder eines Kraftfahrzeuges, hier nicht dargestellt, positioniert werden können. Ferner weist der Prüfstand einen ersten zwei Rollen aufweisenden Hinterachsendoppelrollensatz 14 und einen zweiten zwei Rollen aufweisenden Hinterachsendoppelrollensatz 16 auf, auf welchen die Hinterräder eines Kraftfahrzeuges positioniert werden können. In Fig. 1 sind die Vorderachsendoppelrollensätze 10, 12 und die Hinterachsendoppelrollensätze 14, 16 in einer Ausgangsposition gezeigt, bei welcher in Längsrichtung 48 des Prüfstandes der erste Hinterachsendoppelrollensatz 14 in einer Reihe hinter dem ersten Vorderachsendoppelrollensatz 10 und der zweite Hinterachsendoppelrollensatz 16 in einer Reihe hinter dem zweiten Vorderachsendoppelrollensatz 12 angeordnet sind. Um den Radabstand zwischen den Vorderachsendoppelrollensätzen 10, 12 und den Hinterachsendoppelrollensätzen 14, 16 anpassen zu können, sind die Vorderachsendoppelrollensätze 10, 12 auf Schubgestellen mit daran angeordneten Hubschwellen 18 angeordnet, mittels welcher die Vorderachsendoppelrollensätze 10, 12 in Längsrichtung 48 des Prüfstandes verschiebbar sind.

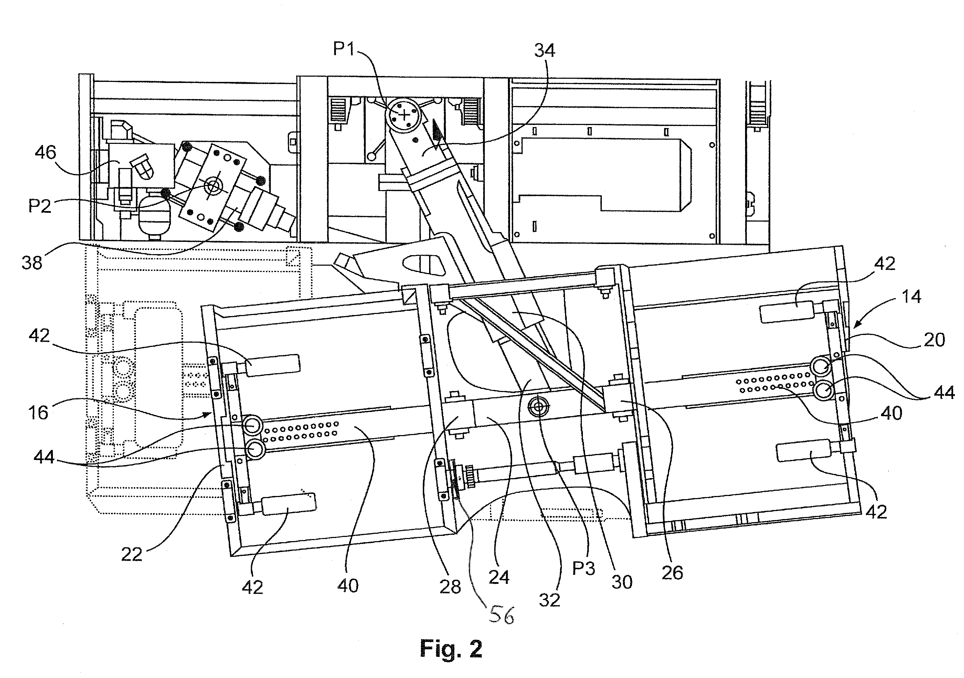

Die beiden Hinterachsendoppelrollensätze 14, 16 sind auf jeweils einer Schleudervorrichtung 20, 22 angeordnet, mittels welcher die Hinterachsendoppelrollensätze 14, 16 relativ zu den Vorderachsendoppelrollensätze 10, 12 verschwenkt, insbesondere seitlich verschwenkt, und/oder verschoben, insbesondere seitlich verschoben, werden können, wie in Fig. 2 gezeigt, um ein Schleudern des Heckbereiches eines Kraftfahrzeuges simulieren zu können. Die beiden Schleudervorrichtungen 20, 22 sind dabei vorzugsweise derart an dem Prüfstand angeordnet, dass sie jeweils über eine Stahlplatte rollen können, indem die Schleudervorrichtungen 20, 22 vorzugsweise auf jeweils vier oder mehr Stahlkugeln gelagert sind, mittels welcher die Schleudervorrichtungen 20, 22 jeweils über die Stahlplatten rollen. Die beiden Schleudervorrichtungen 20, 22 sind mittels eines Koppelelements 24 miteinander verbunden. Das Koppelelement 24 ist in Form einer räumlichen Konstruktion ausgebildet, wobei das Koppelelement 24 mit seinem ersten Ende 26, beispielsweise über eine Bolzenverbindung, mit der ersten Schleudervorrichtung 20 verbunden ist. Mit seinem zweiten Ende 28 ist das Koppelelement 24, beispielsweise über eine Bolzenverbindung, mit der zweiten Schleudervorrichtung 22 verbunden. Dadurch wird eine verspannungsfreie, jedoch äquidistante Anordnung der Hinterachsendoppelrollensätze 14, 16 zueinander garantiert.

An dem Koppelelement 24 ist ein Schwenkarm 30 mit seinem ersten Ende 32 an einem arretierbaren Gelenkpunkt P3 des Koppelelements 24 angeordnet. In der in Fig. 1 gezeigten Ausgangsposition ist der Gelenkpunkt P3 mittels eines Arretierungsmittels arretiert, so dass das Koppelelement 24 keine Pendelbewegung um den Gelenkpunkt P3 ausführen kann. Zum Überführen der Hinterachsendoppelrollensätze 14, 16 von der Ausgangsposition in die in Fig. 2 gezeigte Verschwenkposition wird die Arretierung gelöst, so dass das Koppelelement 24 um den Gelenkpunkt P3 pendeln kann. In der Ausgangsposition ist die Längsachse des Koppelelements 24 vorzugsweise senkrecht zur Längsachse des Schwenkarmes 30 angeordnet, wie in Fig. 1 zu erkennen ist. In dem arretierten Zustand können normale Ablaufprüfungen im motorischen oder generatorischen Betrieb vorzugsweise bis zu einer Geschwindigkeit der Räder auf den Vorderachsendoppelrollensätzen 10, 12 und den Hinterachsendoppelrollensätzen 14, 16 von bis zu 120 km/h durchgeführt werden. Die Rollen des ersten und des zweiten Hinterachsendoppelrollensatzes 14, 16 und die Rollen des ersten und des zweiten Vorderachsendoppelrollensatzes 10, 12 sind jeweils achsweise über einen Motor des Prüfstandes antreibbar und/oder durch die Räder des zu prüfenden Fahrzeuges. Hierbei kann insbesondere für den Antrieb der Rollen des ersten und des zweiten Vorderachsendoppelrollensatzes 10, 12 ein gemeinsamer Zentralantrieb vorgesehen sein, wobei eine erste schaltbare Kupplung 54 zum Trennen des ersten und des zweiten Vorderachsendoppelrollensatzes 10, 12 und eine zweite schaltbare Kupplung 56 zum Trennen des ersten und des zweiten Hinterachsendoppelrollensatzes 14, 16 vorgesehen ist. Die erste schaltbare Kupplung 54 und die zweite schaltbare Kupplung 56 können im laufenden Betrieb betätigt werden.

Der Schwenkarm 30 ist über sein zweites Ende 34 im Punkt P1 fest an dem Prüfstand befestigt, so dass der Schwenkarm 30 eine wie in Fig. 2 gezeigte Drehbewegung um den Punkt P1 ausführen kann. Die Hinterachsendoppelrollensätze 14, 16 sind um P1 und/ oder P3 verschwenkbar ausgebildet.

Ferner ist der Schwenkarm 30 derart ausgestaltet, dass er in seiner Länge veränderbar ist, wie dies mit Pfeil 36 angedeutet ist. Dadurch kann der Schwenkarm 30 insbesondere während seiner Drehbewegung eigenständig einen zusätzlichen Längenausgleich des Abstandes zwischen den Punkten P1 und P3 vornehmen. Damit wird sichergestellt, dass die Hinterräder des zu prüfenden Fahrzeuges bei der Verschwenkbewegung exakt jeweils die Kreisbahn (um einen virtuellen Drehpunkt der Lenkgeometrie am rechten gefesselten Vorderrad) beschreiben können, die sich aus der konkreten Fahrzeuggeometrie notwendig macht.

Um eine Drehbewegung des Schwenkarmes 30 initiieren zu können, wird der Schwenkarm von einem Kolben eines Hydraulikzylinders 38 angetrieben. Die vom Kolben des Hydraulikzylinders 38 auf den Schwenkarm 30 aufgeprägte Kraft wird in Form einer Querbeschleunigung und Gierrate auf das zu prüfende Kraftfahrzeug übertragen. Der Hydraulikzylinder 38 ist zwischen dem ersten Ende 32 und dem zweiten Ende 34 entlang der Längsseite des Schwenkarmes 30 an dem Schwenkarm 30 befestigt. Der Hydraulikzylinder 38 ist in einem Punkt P2 ortsfest an dem Prüfstand befestigt, wobei der Hydraulikzylinder 38 um den Punkt P2 gelenkig gelagert ist, um eine Schwenkbewegung um den Punkt P2 ausführen zu können. Der Hydraulikzylinder 38 ist dabei vorzugsweise mit seiner Längsachse in einem Winkel < 90 ° zu der Längsachse des Schwenkarmes 30 an dem Schwenkarm 30 befestigt.

Bei der Einfahrt eines Kraftfahrzeuges auf den Prüfstand befinden sich vorzugsweise die Vorderachsendoppelrollensätze 10, 12 im kleinstmöglichen Abstand zu den Hinterachsendoppelrollensätzen 14, 16. Das Kraftfahrzeug fährt dabei aus eigener Kraft mit seinen Vorderrädern zunächst über die Hinterachsendoppelrollensätze 14, 16 und anschließend bis auf die Hubschwellen 18, insbesondere die Vorderachsenhubschwellen 18, der Vorderachsendoppelrollensätze 10, 12. Die Hubschwellen 18 senken sich anschließend ab, wodurch die Vorderräder bzw. die Vorderachse des Kraftfahrzeuges in Längsrichtung des Kraftfahrzeuges durch die Wirkung der Vorderachsendoppelrollensätze 10, 12 fixiert werden können. Anschließend verfahren die Schubgestelle der Vorderachsendoppelrollensätze 10, 12 in Längsrichtung 48 des Prüfstandes so weit, bis die Hinterachse bzw. die Hinterräder des Kraftfahrzeuges die Hubschwellen 40, insbesondere die Hinterachsenhubschwellen 40, der Hinterachsendoppelrollensätze 14, 16 erreicht haben. Durch ein Absenken der Hubschwellen 40 können die Hinterachse bzw. die Hinterräder des Kraftfahrzeuges in den Hinterachsendoppelrollensätzen 14, 16 fixiert werden. Der Prüfstand ist zu diesem Zeitpunkt auf das entsprechende Radabstandsmaß des zu prüfenden Kraftfahrzeuges eingestellt.

Durch ein kurzes Anlaufen der Vorderachsendoppelrollensätze 10, 12 und der Hinterachsendoppelrollensätze 14, 16 ist eine Korrektur der seitlichen Ausrichtung des Kraftfahrzeuges zu dem Prüfstand möglich für den Fall, dass Fahrzeugmitte und Prüfstandmitte zu stark voneinander abweichen. Anschließend kann das Kraftfahrzeug in Längsrichtung zusätzlich gesichert werden, indem je Rad zwei zusätzliche Anlaufrollen 42 an die Reifenlaufflächen herangeführt werden. Eine seitliche Führung der Räder kann über jeweils vorzugsweise zwei bis vier mit den Reifenflanken des Rades in Kontakt gebrachte Anlaufrollen 44, vorzugsweise als kegelförmige Anlaufrollen, erfolgen.

Zum Überprüfen der Wirksamkeit der Fahrdynamikregelung des Kraftfahrzeuges und/oder deren Komponenten, wie z.B. Sensoren, können die Hinterachsendoppelrollensätze 14, 16 mittels der Schleudervorrichtungen 20, 22 in einer Ebene vorzugsweise explosionsartig seitlich von der Ausgangsposition in die Verschwenkposition ausgeschwenkt und/oder verschoben werden, wie dies in Fig. 2 gezeigt ist. Dabei erfolgt eine Verschwenkbewegung der Hinterachsendoppelrollensätze 14, 16 relativ zu den Vorderachsendoppelrollensätzen 10, 12. Vor Beginn der Verschwenkbewegung werden vorzugsweise die Räder des Kraftfahrzeuges durch die Vorderachsendoppelrollensätze 10, 12 als auch durch die Hinterachsendoppelrollensätze 14, 16 auf eine vorgewählte Geschwindigkeit gebracht, so dass sie sich drehen, wodurch ein Fahrzustand des "Ausrollens" simuliert werden kann. Bricht unter diesen Bedingungen der Heckbereich des Kraftfahrzeuges aus, werden von der Fahrzeugsensorik kritische Fahrdynamik-Werte diagnostiziert und das Regelsystem, insbesondere das ESP, greift ein. Dadurch ist eine Simulation eines übersteuernden Schleudervorganges möglich. Hierbei kann insbesondere geprüft werden, ob ein selbstständiger Eingriff der Bremsanlage erfolgt, um damit die Funktionsfähigkeit des ESP des Kraftfahrzeuges überprüfen zu können.

Geometrisch betrachtet dreht sich beim Ausbrechen des Heckbereiches das komplette Kraftfahrzeug um den Achsschenkelbolzen (bzw. eine virtuelle Drehachse gemäß konkreter Lenkgeometrie) eines der Vorderräder. Um dies möglichst wirklichkeitsgetreu simulieren zu können, bleibt das Schubgestell eines der Vorderachsendoppelrollensätze 10, 12, in dem in Fig. 2 gezeigten Beispiel der erste Vorderachsdoppelrollensatz 10, fixiert in seiner Versuchsposition, welche beim Einstellen des Radstandes eingestellt wurde. Das andere Vorderrad, um welches das Kraftfahrzeug nicht gedreht wird, beschreibt während der Verschwenkbewegung eine leichte Kreisbahn nach hinten in Richtung der Ausgangslage der Hinterachsendoppelrollensätze 14, 16. Die dabei auftretende sehr geringe Querbewegung des Vorderrades wird vorzugsweise nicht konstruktiv vom Prüfstand abgefangen, sondern einem automatischen Ausgleich des Rades zum Doppelrollensatz 12 überlassen (Driften, Walken). Die dabei ebenfalls auftretende Lageveränderung des Vorderachsendoppelrollensatzes 12 zur Ausgangslage des Hinterachsendoppelrollensatzes 16 wird dadurch ausgeglichen, dass diese Vorderachsendoppelrollen 12 in dem dazugehörigen Schubgestell separat längsverschiebbar gelagert sind. Ein erster Hilfsantrieb 50 mit Hydraulikzylinder kann hierbei den Vorderachsendoppelrollensatz 12 der Bewegung des entsprechenden Vorderrades nachführen.

Für die Hinterachsendoppelrollensätze 14, 16 erfolgt das Auslenken der Schleudervorrichtungen 20, 22 vorzugsweise über ein SPS-gesteuertes hydraulisches Proportionalventil 46, welches den Kolben des Hydraulikzylinders 38 beaufschlagt. Ein großer Blasenspeicher, welcher ununterbrochen auf einem bestimmten Druckniveau gehalten werden kann, stellt dafür die benötigte hydraulische Energie explosionsartig zur Verfügung. Mit Hilfe der SPS kann der Ablauf des Schleudervorgangs bzw. der Verschwenkbewegung frei programmiert werden. Zeitliche Abläufe, die Größe der Beschleunigung, die Schleudergeschwindigkeit und der Abbremsprozess können variiert werden. Dadurch ist eine Anpassung an die Regelcharakteristiken unterschiedlicher Fahrzeugtypen möglich.

Unterschiedliche Achsabstände, Spurweiten, Bereifungen und die Lenkgeometrie der Kraftfahrzeuge führen dazu, dass eine nahezu unbegrenzte Anzahl verschiedener Bewegungskurven für die Schleudervorrichtungen 20, 22 der Hinterachsendoppelrollensätze 14, 16 realisiert werden müssen. Daher ist der Prüfstand vorzugsweise derart aufgebaut, dass der Schleudermechanismus selber nur die notwendigen Bewegungsabläufe für den Gelenkpunkt P3 sicherstellt. Die konkreten Bewegungskurven der Schleudervorrichtungen 20, 22 werden dabei vorzugsweise nicht programmiert, wodurch die Komplexität des Prüfstandes verringert werden kann. Stattdessen wird vorzugsweise jeweils das entsprechende Kraftfahrzeug mit seiner Fahrzeuggeometrie wie eine Schablone benutzt, um exakt die für dieses Kraftfahrzeug erforderliche Verschwenkbewegung der Schleudervorrichtungen 20, 22 bzw. der Hinterachsendoppelrollensätze 14, 16 ausführen zu können.

Dies wird vorteilhafterweise dadurch erreicht, indem die in der Ausgangsposition arretierte Längsverstellung des Schwenkarmes 30 und die Arretierung des Gelenkpunktes P3 an dem Koppelelement 24 gelöst wird. Sind die Arretierungen gelöst, können die Schleudervorrichtungen 20, 22 über das Koppelelement 24 um den Punkt P3 pendeln und gleichzeitig um den Punkt P1 schwenken, so dass die korrekte Führung der Schleudervorrichtungen 20, 22 durch das Kraftfahrzeug selbst erfolgt.

Der Hydraulikzylinder 38 ist dabei derart ausgestaltet, dass er sowohl eine Beschleunigung des Schwenkarmes 30 zur Auslösung der Verschwenkbewegung als auch eine Verzögerung bzw. Dämpfung des Schwenkarmes 30 zum Abbremsen der Verschwenkbewegung ermöglicht. Das Abbremsen kann dabei zusätzlich durch weitere Dämpfungselemente und/oder durch eine Notfang-Einrichtung ergänzt werden.

Nach Abschluss der Verschwenkbewegung bzw. des Schleudervorganges wird das Kraftfahrzeug mit vorzugweise einer deutlich langsameren Geschwindigkeit als bei der Verschwenkbewegung von der Verschwenkposition zurück in die Ausgangsposition zurück bewegt. Die Anlaufrollen 44 können diesen Prozess zusätzlich unterstützen. Abschließend kann eine mechanische Verriegelung des Schleudermechanismus, indem beispielsweise die Arretierungen des Schwenkarmes 30 wieder festgestellt werden, erfolgen, damit für erneute Versuche eine definierte Ausgangsposition zur Verfügung gestellt werden kann.

Alle Abläufe können vorzugsweise über eine Steuereinheit des Prüfstandes erfolgen, so dass eine Bedienung des Ablaufes durch eine Testperson nicht mehr erforderlich ist. Subjektive Einflüsse durch den Bediener oder einen Testfahrer können dadurch ausgeschlossen werden.

## Patentansprüche

1. Prüfstand für ein Kraftfahrzeug mit
einem ersten zwei Rollen aufweisenden Vorderachsendoppelrollensatz (10) und einem zweiten zwei Rollen aufweisenden Vorderachsendoppelrollensatz (12) und
einem ersten zwei Rollen aufweisenden Hinterachsendoppelrollensatz (14) und einem zweiten zwei Rollen aufweisenden Hinterachsendoppelrollensatz (16),
**dadurch gekennzeichnet, dass**
der erste Hinterachsendoppelrollensatz (14) und der zweite Hinterachsendoppelrollensatz (16) relativ zu dem ersten Vorderachsendoppelrollensatz (10) und/oder dem zweiten Vorderachsendoppelrollensatz (12) in einer Ebene schwenkbar und/ oder sowohl schwenkbar als auch verschiebbar gelagert ist, wobei der erste Hinterachsendoppelrollensatz (14) und der zweite Hinterachsendoppelrollensatz (16) zur Ausführung von bogenförmigen Bahnen verschwenkbar ausgebildet sind.

2. Prüfstand nach Anspruch 1, **dadurch gekennzeichnet, dass** der erste Hinterachsendoppelrollensatz (14) an einer ersten Schleudervorrichtung (20) und der zweite Hinterachsendoppelrollensatz (16) an einer zweiten Schleudervorrichtung (22) angeordnet sind, wobei die erste Schleudervorrichtung (20) und die zweite Schleudervorrichtung (22) über ein Koppelelement (24) miteinander verbunden sind.

3. Prüfstand nach Anspruch 2, **dadurch gekennzeichnet, dass** zur Ausführung einer Verschwenkbewegung des ersten Hinterachsendoppelrollensatzes (14) und des zweiten Hinterachsendoppelrollensatzes (16) ein Schwenkarm (30) vorgesehen ist, wobei der Schwenkarm (30) mit einem ersten Ende (32) gelenkig an dem Koppelelement (24) angeordnet ist und mit einem dem ersten Ende (32) gegenüberliegenden zweiten Ende (34) ortsfest an dem Prüfstand befestigt ist, wobei insbesondere der Schwenkarm (30) entlang seiner Längsachse in seiner Länge veränderbar ist und dass der Schwenkarm (30) um sein zweites Ende (34) drehbar angeordnet ist.

4. Prüfstand nach Anspruch 3, **dadurch gekennzeichnet, dass** die erste Schleudervorrichtung (20) und/oder die zweite Schleudervorrichtung (22) Arretierungsmittel aufweist.

5. Prüfstand nach Anspruch 3 oder 4, **dadurch gekennzeichnet, dass** zur Realisierung einer Verschwenkbewegung des ersten Hinterachsendoppelrollensatzes (14) und des zweiten Hinterachsendoppelrollensatzes (16) der Schwenkarm (30) mittels eines Antriebes, vorzugsweise mittels eines Kolbens eines Hydraulikzylinders (38) antreibbar ist, wobei insbesondere eine Antriebbewegung des Antriebs, insbesondere des Kolbens des Hydraulikzylinders (38) über ein SPS-gesteuertes hydraulisches Proportionalventil (46) auslösbar ist und mittels eines SPS-Programms in seiner Bewegung und dem Grad der Beschleunigung steuerbar ist.

6. Prüfstand nach einem der Ansprüche 1 bis 5, **dadurch gekennzeichnet, dass** der erste Vorderachsendoppelrollensatz (10) während einer Verschwenkbewegung des ersten Hinterachsendoppelrollensatzes (14) und des zweiten Hinterachsendoppelrollensatzes (16) in einer festen Position an dem Prüfstand angeordnet ist, wobei insbesondere der zweite Vorderachsendoppelrollensatz (12) während einer Verschwenkbewegung des ersten Hinterachsendoppelrollensatzes (14) und des zweiten Hinterachsendoppelrollensatzes (16) in Längsrichtung (48) des Prüfstandes beweglich an dem Prüfstand angeordnet ist.

7. Prüfstand nach einem der Ansprüche 1 bis 6, **dadurch gekennzeichnet, dass** die Rollen des ersten Hinterachsendoppelrollensatzes (14) und/oder des zweiten Hinterachsendoppelrollensatzes (16) sowie die Rollen des ersten Vorderachsendoppelrollensatzes (10) und/oder des zweiten Vorderachsendoppelrollensatzes (12) in ihrer Drehrichtung und/oder in ihrer Drehzahl variabel einstellbar sind, wobei insbesondere alle Rollen stets gleichsinnig drehen, wobei insbesondere die Drehzahl der Rollen des ersten und des zweiten Hinterachsendoppelrollensatzes (14, 16) zu der Drehzahl der Rollen des ersten und des zweiten Vorderachsendoppelrollensatzes (10, 12) entkoppelt ist.

8. Prüfstand nach einem der Ansprüche 1 bis 7, **dadurch gekennzeichnet, dass** die Rollen des ersten und des zweiten Hinterachsendoppelrollensatzes (14, 16) und die Rollen des ersten und des zweiten Vorderachsendoppelrollensatzes (10, 12) jeweils achsweise über mindestens einen Motor des Prüfstandes antreibbar sind oder diese Rollen nur durch die Räder des zu prüfenden Fahrzeuges antreibbar sind, wobei insbesondere für den Antrieb der Rollen des ersten und des zweiten Vorderachsendoppelrollensatzes (10, 12) ein gemeinsamer Zentralantrieb vorgesehen ist, wobei insbesondere eine erste schaltbare Kupplung (54) zum Trennen des ersten und des zweiten Vorderachsendoppelrollensatzes (10, 12) und/oder eine zweite schaltbare Kupplung (56) zum Trennen des ersten und des zweiten Hinterachsendoppelrollensatzes (14, 16) vorgesehen ist.

9. Prüfstand nach einem der Ansprüche 1 bis 8, **dadurch gekennzeichnet, dass** der erste und der zweite Vorderachsendoppelrollensatz (10, 12) und/oder der erste und der zweite Hinterachsendoppelrollensatz (14, 16) jeweils mindestens eine freilaufende Rolle aufweist, wobei insbesondere die jeweils mindestens eine freilaufende Rolle einen Impulsgeber zur Drehzahlmessung aufweist.

10. Prüfstand nach einem der Ansprüche 1 bis 9, **dadurch gekennzeichnet, dass** ein Datenadapter zur Aufnahme und/oder Speicherung von Signalen von Fahrdynamiksystemen und/oder Fahrzeugsteuergeräten vorgesehen ist.

11. Verfahren zum Überprüfen von Fahrdynamiksystemen und/oder deren Komponenten mit Hilfe eines Prüfstands, insbesondere nach einem der Ansprüche 1 bis 10, mit einem ersten Hinterachsendoppelrollensatzes (14) und einem zweiten Hinterachsendoppelrollensatzes (16) zur Aufnahme der Hinterräder eines Kraftfahrzeugs, bei dem ein Kraftfahrzeug auf dem Prüfstand befestigt wird, wobei Hinterräder des Kraftfahrzeugs jeweils mit dem ersten Hinterachsendoppelrollensatzes (14) und dem zweiten Hinterachsendoppelrollensatzes (16) verbunden werden, wobei der erste Hinterachsendoppelrollensatz (14) und der zweite Hinterachsendoppelrollensatz (16) plötzlich entlang bogenförmiger Bahnen verschwenkt werden, und Ausgangssignale von Fahrdynamiksystemen, wie beispielsweise eines ESP-Systems, und/oder Drehzahlverläufe der einzelnen Räder des Kraftfahrzeuges aufgenommen und zur Überprüfung der Funktionsweise des Fahrdynamiksystems ausgewertet werden.

12. Verfahren nach Anspruch 11, bei dem mit Beginn des Überprüfungsverfahrens mit einer explosionsartigen Freisetzung der Hauptenergie die Verschwenkbewegung des ersten und des zweiten Hinterachsendoppelrollensatzes (14, 16) seitlich, vorzugsweise nach rechts, ausgeführt wird, und dabei die Ausgangsignale der Fahrdynamiksysteme und/oder deren Komponenten zeitaufgelöst, vorzugweise über das fahrzeugeigene Bussystem, elektronisch erfasst und/oder die Bewegung der Fahrzeugräder, vorzugsweise des rechten Vorderrades, mit Videoaufnahmegeräten optisch erfasst und/oder Drehzahlverläufe der einzelnen Räder des Kraftfahrzeuges erfasst und nachfolgend jeweils ausgewertet werden, wobei während des gesamten Überprüfungsverfahrens alle Doppelrollensätze (10, 12, 14, 16) sich in Drehbewegungen befinden und eine solche Mindestauslenkung des Lenkrades des Kraftfahrzeugs vorliegt, dass eine Aktivierung eines Lenkwinkelsensor des Kraftfahrzeugs vorhanden ist.

13. Verfahren nach Anspruch 11 oder 12, **dadurch gekennzeichnet, dass** während der Verschwenkbewegung des ersten und des zweiten Hinterachsendoppelrollensatzes (14, 16) mittels eines ersten Hilfsantriebes (50), vorzugweise eines ersten Kolbens mit erstem Hilfszylinder, die Ausgleichbewegung des ersten und/oder zweiten Vorderachsendoppelrollensatze (10,12) in Längsrichtung (48) des Prüfstandes und gleichzeitig mittels eines zweiten Hilfsantriebes (52), vorzugweise eines zweiten Kolbens mit zweiten Hilfszylinder, die Ausgleichsbewegung des ersten und des zweiten Hinterachsendoppelrollensatzes (14, 16) in Längsrichtung des Schwenkarms (30) bewirkt wird, wobei insbesondere im Moment des Beginns der Verschwenkbewegung die Rotation der Rollen des ersten und des zweiten Vorderachsendoppelrollensatzes (10, 12) und die Rotation der Rollen des ersten und des zweiten Hinterachsendoppelrollensatzes (14, 16) jeweils voneinander entkoppelt werden.

14. Verfahren nach Anspruch 13, bei dem die Überprüfung von Fahrdynamiksystemen mit der Verschwenkbewegung des ersten und des zweiten Hinterachsendoppelrollensatzes (14, 16) aus der Ausgangslage des Schwenkarms (30) beginnt und gleichzeitig eine Energiezufuhr des ersten Hilfsantriebs (50), vorzugweise des ersten Kolbens mit Hilfszylinder, und des zweiten Hilfsantriebs (52), vorzugweise des zweiten Kolbens mit Hilfszylinder, freigegeben wird und solange erfolgen kann bis der Schwenkarm (30) seine Endlage erreicht, wobei damit die Überprüfung von Fahrdynamiksystemen beendet wird und auch die jeweilige Energiezufuhr für den ersten und den zweiten Hilfsantrieb (50, 52) beendet wird.

15. Verfahren nach Anspruch 13 oder 14, bei dem während der Verschwenkbewegung des ersten und des zweiten Hinterachsendoppelrollensatzes (14, 16) eine formschlüssige Verbindung von Prüfstand und Fahrzeug über die Doppelrollensätze gehalten wird, indem eine fahrzeugangepasste Energiezufuhr für den ersten und zweiten Hilfsantrieb (51,52) erfolgt und damit die Fahrzeuggeometrie des zu prüfenden Fahrzeugs den Verlauf dieser Verschwenkbewegung des ersten und des zweiten Hinterachsendoppelrollensatzes (14, 16) sowie die Ausgleichbewegung des ersten und/oder zweiten Vorderachsendoppelrollensatzes (10, 12) und die Augleichsbewegung des ersten und zweiten Hinterachsendoppelrollensatzes (14, 16) schablonenmäßig bestimmt.

## Claims

1. Test facility for a motor vehicle having a first front-axle double roller set (10) having two rollers and a second front-axle double roller set (12) having two rollers and a first rear-axle double roller set (14) having two rollers and a second rear-axle double roller set (16) having two rollers, **characterized in that**
the first rear-axle double roller set (14) and the second rear-axle double roller set (16) are mounted so as to be pivotable and/or both pivotable and slideable relative to the first front-axle double roller set (10) and/or the second front-axle double roller set (12) in a plane, wherein the first rear-axle double roller set (14) and the second rear-axle double roller set (16) are of pivotable design in order to implement arcuate paths.

2. Test facility according to Claim 1, **characterized in that** the first rear-axle double roller set (14) is arranged on a first skid device (20), and the second rear-axle double roller set (16) is arranged on a second skid device (22), wherein the first skid device (20) and the second skid device (22) are connected to one another via a coupling element (24).

3. Test facility according to Claim 2, **characterized in that** a pivoting arm (30) is provided for carrying out a pivoting movement of the first rear-axle double roller set (14) and of the second rear-axle double roller set (16), wherein the pivoting arm (30) is arranged with the first end (32) in an articulated fashion on the coupling element (24) and is attached with a second end (34) lying opposite the first end (32) to the test facility in a positionally fixed fashion, wherein, in particular, the pivoting arm (30) has a length which can be varied along its longitudinal axis, and **in that** the pivoting arm (30) is arranged so as to be rotatable about its second end (34).

4. Test facility according to Claim 3, **characterized in that** the first skid device (20) and/or the second skid device (22) have locking means.

5. Test facility according to Claim 3 or 4, **characterized in that** in order to implement a pivoting movement of the first rear-axle double roller set (14) and of the second rear-axle double roller set (16) the pivoting arm (30) can be driven by means of a drive, preferably by means of a piston of a hydraulic cylinder (38), wherein, in particular, a driving movement of the drive, in particular of the piston of the hydraulic cylinder (38), can be triggered by means of an SPS-controlled hydraulic proportional valve (46) and can be controlled in its movement and in the degree of acceleration by means of an SPS programme.

6. Test facility according to one of Claims 1 to 5, **characterized in that** the first front-axle double roller set (10) is arranged in a fixed position on the test facility during a pivoting movement of the first rear-axle double roller set (14) and of the second rear-axle double roller set (16), wherein, in particular, the second front-axle double roller set (12) is arranged on the test facility so as to be movable in the longitudinal direction (48) of the test facility during a pivoting movement of the first rear-axle double roller set (14) and of the second rear-axle double roller set (16).

7. Test facility according to one of Claims 1 to 6, **characterized in that** the rollers of the first rear-axle double roller set (14) and/or of the second rear-axle double roller set (16) and the rollers of the first front-axle double roller set (10) and/or of the second front-axle double roller set (12) can be set in a variable fashion in their rotational direction and/or in their rotational speed, wherein, in particular, all the rollers always rotate in the same direction, wherein, in particular, the rotational speed of the rollers of the first and second rear-axle double roller sets (14, 16) is decoupled from the rotational speed of the rollers of the first and second front-axle double roller sets (10, 12).

8. Test facility according to one of Claims 1 to 7, **characterized in that** the rollers of the first and second rear-axle double roller sets (14, 16) and the rollers of the first and second front-axle double roller sets (10, 12) can each be driven on an axle basis via at least one motor of the test facility, or these rollers can be driven only by the wheels of the vehicle to be tested, wherein, in particular, for the drive of the rollers of the first and second front-axle double roller sets (10, 12) a common central drive is provided, wherein, in particular, a first shiftable clutch (54) is provided for disconnecting the first and second front-axle double roller sets (10, 12) and/or a second shiftable clutch (56) is provided for disconnecting the first and second rear-axle double roller sets (14, 16).

9. Test facility according to one of Claims 1 to 8, **characterized in that** the first and second front-axle double roller sets (10, 12) and/or the first and second rear-axle double roller sets (14, 16) each have at least one free-wheeling roller, wherein, in particular, the respective at least one free-wheeling roller has a pulse generator for measuring the rotational speed.

10. Test facility according to one of Claims 1 to 9, **characterized in that** a data adapter is provided for picking up and/or storing signals of vehicle movement dynamics systems and/or vehicle control devices.

11. Method for checking vehicle movement dynamics systems and/or their components using a test facility, in particular according to one of Claims 1 to 10, having a first rear-axle double roller set (14) and a second rear-axle double roller set (16) for receiving the rear wheels of a motor vehicle, in which a motor vehicle is attached to the test facility, wherein rear wheels of the motor vehicle are each connected to the first rear-axle double roller set (14) and to the second rear-axle double roller set (16), wherein the first rear-axle double roller set (14) and the second rear-axle double roller set (16) are suddenly pivoted along arcuate paths, and output signals of vehicle movement dynamics systems such as, for example, an ESP system and/or rotational speed profiles of the individual wheels of the motor vehicle are picked up and evaluated for checking the method of functioning of the vehicle movement dynamics system.

12. Method according to Claim 11, in which, at the start of the checking method, the pivoting movement of the first and second rear-axle double roller sets (14, 16) is carried out laterally, preferably to the right, with an explosion-like release of the main energy, and in this context the output signals of the vehicle movement dynamics systems and/or their components are resolved over time, preferably via the vehicle's own bus system, detected electronically and/or the movement of the vehicle wheels, preferably of the right-hand front wheel, is detected optically with video recording devices and/or rotational speed profiles of the individual wheels of the motor vehicle are detected and subsequently each evaluated, wherein during the entire checking method all the double roller sets (10, 12, 14, 16) are executing rotational movements and a minimum deflection of the steering wheel of the motor vehicle is present such that a steering angle sensor of the motor vehicle is activated.

13. Method according to Claim 11 or 12, **characterized in that** during the pivoting movement of the first and second rear-axle double roller sets (14, 16), the compensating movement of the first and/or second front-axle double roller sets (10, 12) in the longitudinal direction (48) of the test facility is brought about by means of a first auxiliary drive (50), preferably a first piston with a first auxiliary cylinder, and at the same time the compensating movement of the first and second rear-axle double roller sets (14, 16) in the longitudinal direction of the pivoting arm (30) is brought about by means of a second auxiliary drive (52), preferably a second piston with a second auxiliary cylinder, wherein, in particular, at the moment when the pivoting movement starts the rotation of the rollers of the first and second front-axle double roller sets (10, 12) and the rotation of the rollers of the first and second rear-axle double roller sets (14, 16) are respectively decoupled from one another.

14. Method according to Claim 13, in which the checking of vehicle movement dynamics systems with the pivoting movement of the first and second rear-axle double roller sets (14, 16) starts from the home position of the pivoting arm (30) and at the same time a supply of energy of the first auxiliary drive (50), preferably of the first piston with an auxiliary cylinder, and of the second auxiliary drive (52), preferably of the second piston with an auxiliary cylinder, is enabled and can occur until the pivoting arm (30) reaches its end position, wherein in this way the checking of vehicle movement dynamics systems is ended and also the respective supply of energy for the first and second auxiliary drives (50, 52) is ended.

15. Method according to Claim 13 or 14, in which, during the pivoting movement of the first and second rear-axle double roller sets (14, 16) a positively locking connection of the test facility and vehicle is maintained via the double roller sets, in that a vehicle-adapted supply of energy for the first and second auxiliary drives (51, 52) takes place and therefore the vehicle geometry of the vehicle to be tested determines the profile of this pivoting movement of the first and second rear-axle double roller sets (14, 16), the compensating movement of the first and/or second front-axle double roller sets (10, 12) and the compensating movement of the first and second rear-axle double roller sets (14, 16) in the manner of a template.

## Revendications

1. Banc d'essai pour un véhicule automobile, comprenant
un premier jeu de doubles rouleaux d'essieu avant (10) qui possède deux rouleaux et un deuxième jeu de doubles rouleaux d'essieu avant (12) qui possède deux rouleaux et
un premier jeu de doubles rouleaux d'essieu arrière (14) qui possède deux rouleaux et un deuxième jeu de doubles rouleaux d'essieu arrière (16) qui possède deux rouleaux,
**caractérisé en ce que**
le premier jeu de doubles rouleaux d'essieu arrière (14) et le deuxième jeu de doubles rouleaux d'essieu arrière (16) sont montés pivotants et/ou à la fois pivotants et coulissants dans un plan par rapport au premier jeu de doubles rouleaux d'essieu avant (10) et/ou au deuxième jeu de doubles rouleaux d'essieu avant (12), le premier jeu de doubles rouleaux d'essieu arrière (14) et le deuxième jeu de doubles rouleaux d'essieu arrière (16) étant configurés pivotants en vue d'accomplir une trajectoire courbe.

2. Banc d'essai selon la revendication 1, **caractérisé en ce que** le premier jeu de doubles rouleaux d'essieu arrière (14) est disposé sur un premier dispositif centrifuge (20) et le deuxième jeu de doubles rouleaux d'essieu arrière (16) sur un deuxième dispositif centrifuge (22), le premier dispositif centrifuge (20) et le deuxième dispositif centrifuge (22) étant reliés ensemble par le biais d'un élément de couplage (24).

3. Banc d'essai selon la revendication 2, **caractérisé en ce qu'**un bras pivotant (30) est présent en vue de l'accomplissement d'un mouvement de pivotement du premier jeu de doubles rouleaux d'essieu arrière (14) et du deuxième jeu de doubles rouleaux d'essieu arrière (16), le bras pivotant (30) étant disposé de manière articulée sur l'élément de couplage (24) par une première extrémité (32) et étant fixé en position fixe au banc d'essai par une deuxième extrémité (34) opposée à la première extrémité (32), le bras pivotant (30) ayant notamment une longueur variable le long de son axe longitudinal et **en ce que** le bras pivotant (30) est monté rotatif autour de sa deuxième extrémité (34).

4. Banc d'essai selon la revendication 3, **caractérisé en ce que** le premier dispositif centrifuge (20) et/ou le deuxième dispositif centrifuge (22) possèdent des moyens de blocage.

5. Banc d'essai selon la revendication 3 ou 4, **caractérisé en ce qu'**en vue de réaliser un mouvement de pivotement du premier jeu de doubles rouleaux d'essieu arrière (14) et du deuxième jeu de doubles rouleaux d'essieu arrière (16), le bras pivotant (30) peut être entraîné au moyen d'un mécanisme d'entraînement, de préférence au moyen d'un piston d'un vérin hydraulique (38), un mouvement d'entraînement du mécanisme d'entraînement, notamment du piston du vérin hydraulique (38), pouvant être déclenché par le biais d'une vanne proportionnelle hydraulique (46) commandée par un API et pouvant être commandé dans son mouvement et son degré d'accélération au moyen d'un programme d'API.

6. Banc d'essai selon l'une des revendications 1 à 5, **caractérisé en ce que** le premier jeu de doubles rouleaux d'essieu avant (10) est disposé dans une position fixe sur le banc d'essai pendant un mouvement de pivotement du premier jeu de doubles rouleaux d'essieu arrière (14) et du deuxième jeu de doubles rouleaux d'essieu arrière (16), le deuxième jeu de doubles rouleaux d'essieu avant (12) étant notamment monté mobile sur le banc d'essai dans le sens longitudinal (48) du banc d'essai pendant un mouvement de pivotement du premier jeu de doubles rouleaux d'essieu arrière (14) et du deuxième jeu de doubles rouleaux d'essieu arrière (16).

7. Banc d'essai selon l'une des revendications 1 à 6, **caractérisé en ce que** le sens de rotation et/ou la vitesse de rotation des rouleaux du premier jeu de doubles rouleaux d'essieu arrière (14) et/ou du deuxième jeu de doubles rouleaux d'essieu arrière (16) ainsi que des rouleaux du premier jeu de doubles rouleaux d'essieu avant (10) et/ou du deuxième jeu de doubles rouleaux d'essieu avant (12) sont réglables de manière variable, tous les rouleaux tournant notamment toujours dans le même sens, la vitesse de rotation des rouleaux des premier et deuxième jeux de doubles rouleaux d'essieu arrière (14, 16) étant notamment découplée de la vitesse de rotation des rouleaux des premier et deuxième jeux de doubles rouleaux d'essieu avant (10, 12).

8. Banc d'essai selon l'une des revendications 1 à 7, **caractérisé en ce que** les rouleaux des premier et deuxième jeux de doubles rouleaux d'essieu arrière (14, 16) et les rouleaux des premier et deuxième jeux de doubles rouleaux d'essieu avant (10, 12) peuvent être entraînés respectivement par essieu par le biais d'au moins un moteur du banc d'essai, ou alors ces rouleaux ne peuvent être entraînés que par les roues du véhicule à soumettre aux essais, un mécanisme d'entraînement central étant notamment présent pour l'entraînement des rouleaux des premier et deuxième jeux de doubles rouleaux d'essieu avant (10, 12), un premier accouplement débrayable (54) destiné à séparer le premier et le deuxième jeu de doubles rouleaux d'essieu avant (10, 12) et/ou un deuxième accouplement débrayable (56) destiné à séparer le premier et le deuxième jeu de doubles rouleaux d'essieu arrière (14, 16) étant notamment présents.

9. Banc d'essai selon l'une des revendications 1 à 8, **caractérisé en ce que** les premier et deuxième jeux de doubles rouleaux d'essieu avant (10, 12) et/ou les premier et deuxième jeux de doubles rouleaux d'essieu arrière (14, 16) possèdent respectivement au moins un rouleau en roue libre, l'au moins un rouleau en roue libre respectif possédant notamment un codeur à impulsions destiné à mesurer la vitesse de rotation.

10. Banc d'essai selon l'une des revendications 1 à 9, **caractérisé en ce qu'**un adaptateur de données destiné à enregistrer et/ou à mémoriser des signaux de systèmes de régulation de la dynamique de conduite et/ou de contrôleurs de véhicule est présent.

11. Procédé de contrôle de systèmes de régulation de la dynamique de conduite et/ou de leurs composants à l'aide d'un banc d'essai, notamment selon l'une des revendications 1 à 10, comprenant un premier jeu de doubles rouleaux d'essieu arrière (14) et un deuxième jeu de doubles rouleaux d'essieu arrière (16) destinés à accueillir les roues arrière d'un véhicule automobile, procédé selon lequel un véhicule automobile est fixé sur le banc d'essai, les roues arrière du véhicule automobile étant respectivement attachées au premier jeu de doubles rouleaux d'essieu arrière (14) et au deuxième jeu de doubles rouleaux d'essieu arrière (16), le premier jeu de doubles rouleaux d'essieu arrière (14) et le deuxième jeu de doubles rouleaux d'essieu arrière (16) étant brusquement mis en pivotement le long de trajectoires courbes et les signaux de sortie de systèmes de régulation de la dynamique de conduite, comme par exemple d'un système EPS, et/ou les courbes de vitesse de rotation des roues individuelles du véhicule automobile étant enregistrés et interprétés en vue de vérifier le mode de fonctionnement du système de régulation de la dynamique de conduite.

12. Procédé selon la revendication 11, avec lequel le mouvement de pivotement du premier et du deuxième jeu de doubles rouleaux d'essieu arrière (14, 16) est accompli latéralement, de préférence vers la droite, avec le début du procédé de contrôle avec une libération à la manière d'une explosion de l'énergie principale, et les signaux de sortie des systèmes de régulation de la dynamique de conduite et/ou de leurs composants sont collectés électroniquement, de préférence par le biais du système de bus propre au véhicule et/ou le mouvement des roues du véhicule, de préférence de la roue avant droite, est collecté optiquement avec des appareils d'enregistrement vidéo et/ou les courbes de vitesse de rotation des roues individuelles du véhicule automobile sont collectées et ensuite respectivement interprétées, tous les jeux de doubles rouleaux d'essieu (10, 12, 14, 16) se trouvant dans des mouvements de rotation pendant l'ensemble du procédé de contrôle et il existe alors une déviation minimale du volant de direction du véhicule automobile telle, qu'il se produit une activation d'un détecteur d'angle de direction du véhicule automobile.

13. Procédé selon la revendication 11 ou 12, **caractérisé en ce que** pendant le mouvement de pivotement du premier et du deuxième jeu de doubles rouleaux d'essieu arrière (14, 16), le mouvement de compensation des premier et/ou deuxième jeux de doubles rouleaux d'essieu avant (10, 12) dans le sens longitudinal (48) du banc d'essai est effectué au moyen d'un premier mécanisme d'entraînement auxiliaire (50), de préférence d'un premier piston avec un premier vérin auxiliaire, et simultanément le mouvement de compensation des premier et deuxième jeux de doubles rouleaux d'essieu arrière (14, 16) est effectué dans le sens longitudinal du bras pivotant (30) au moyen d'un deuxième mécanisme d'entraînement auxiliaire (52), de préférence d'un deuxième piston avec un deuxième vérin auxiliaire, la rotation des rouleaux des premier et deuxième jeux de doubles rouleaux d'essieu avant (10, 12) et la rotation des rouleaux des premier et deuxième jeux de doubles rouleaux d'essieu arrière (14, 16) étant respectivement découplées l'une de l'autre, notamment au moment du début du mouvement de pivotement.

14. Procédé selon la revendication 13, selon lequel le contrôle des systèmes de régulation de la dynamique de conduite commence par le mouvement de pivotement des premier et deuxième jeux de doubles rouleaux d'essieu arrière (14, 16) depuis la position initiale du bras pivotant (30) et, simultanément, une arrivée d'énergie du premier mécanisme d'entraînement auxiliaire (50), de préférence du premier piston avec vérin auxiliaire, et du deuxième mécanisme d'entraînement auxiliaire (52), de préférence du deuxième piston avec vérin auxiliaire, est libérée et peut avoir lieu jusqu'à ce que le bras pivotant (30) atteigne sa position finale, après quoi le contrôle des systèmes de régulation de la dynamique de conduite prend fin et l'arrivée d'énergie correspondante pour le premier et le deuxième mécanisme d'entraînement auxiliaire (50, 52) prend elle aussi fin.

15. Procédé selon la revendication 13 ou 14, selon lequel, pendant le mouvement de pivotement des premier et deuxième jeux de doubles rouleaux d'essieu arrière (14, 16), une liaison par complémentarité de formes du banc d'essai et du véhicule est maintenue par le biais des jeux de doubles rouleaux en ce qu'une arrivée d'énergie adaptée au véhicule a lieu pour le premier et le deuxième mécanisme d'entraînement auxiliaire (51, 52) et, de ce fait, la géométrie du véhicule à soumettre aux essais détermine à la manière d'un gabarit la courbe de ce mouvement de pivotement des premier et deuxième jeux de doubles rouleaux d'essieu arrière (14, 16) ainsi que le mouvement de compensation du premier et/ou du deuxième jeu de doubles rouleaux d'essieu avant (10, 12) et le mouvement de compensation des premier et deuxième jeux de doubles rouleaux d'essieu arrière (14, 16).
